# EUROPEAN PATENT SPECIFICATION

(11) **EP 1 933 498 B1**
(45) Date of publication and mention of the grant of the patent: **11.08.2010**
(21) Application number: 06790947.3
(22) Date of filing: 05.09.2006
(51) Int. Cl.: H04L 9/32, H04L 29/06, H04L 9/08

(54) **METHOD, SYSTEM AND DEVICE FOR NEGOTIATING ABOUT CIPHER KEY SHARED BY UE AND EXTERNAL EQUIPMENT**
VERFAHREN, SYSTEM UND EINRICHTUNG ZUM BEHANDELN ÜBER EINEN VON UE UND EXTERNEN GERÄTEN GEMEINSAM BENUTZTEN CHIFFRIERSCHLÜSSEL
PROCEDE, SYSTEME ET DISPOSITIF DE NEGOCIATION A PROPOS D'UNE CLE DE CHIFFREMENT PARTAGEE PAR EQUIPEMENT UTILISATEUR ET EQUIPEMENT EXTERNE

(30) Priority: 05.09.2005 CN 200510098624; 01.03.2006 CN 200610057852
(43) Date of publication of application: 18.06.2008
(73) Proprietor: Huawei Technologies Co., Ltd., Longgang District, Shenzhen Guangdong 518129 (CN)
(72) Inventor: YANG, Yanmei, Guangdong 518129 (CN)
(74) Representative: Hengelhaupt, Jürgen
(86) International application number: PCT/CN2006/002283
(87) International publication number: WO 2007/028328

(56) References cited:
- WO-A1-00/51386
- WO-A1-00/72506
- CN-A- 1 167 553
- "3rd Generation Partnership Project; Technical Specification Group Services and System Aspects Key establishment between a UICC and a terminal; (Release 7); 3GPP TS 33.110" ETSI STANDARDS, LIS, SOPHIA ANTIPOLIS CEDEX, FRANCE, no. V1.0.0, 1 June 2006 (2006-06-01), XP014035038 ISSN: 0000-0001
- GEMPLUS ET AL: "GAA-based terminal to UICC key establishment" 21 June 2005 (2005-06-21), 3GPP DRAFT; S3-050378_TERMINAL_UICC_KEY_ESTABLISHMENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , XP050277712 * the whole document *
- 3GPP SA WG3: "3rd Generation Partnership Project; Technical Specification Group Service and System Aspects; Feasibility Study on (U)SIM Security Reuse by Peripheral Devices on Local Interfaces (Release 6) ; 3GPP TR 33.817 V6.1.0" 3RD GENERATION PARTNERSHIP PROJECT (3GPP); TECHNICAL REPORT (TR), XX, XX, vol. 33.817, no. V6.1.0, 1 December 2004 (2004-12-01), pages 1-39, XP002432220
- "ETSI TS 133 220 Universal Mobile Telecommunications System (UMTS); Generic Authentication Architecture (GAA); Generic bootstrapping architecture (3GPP TS 33.220 version 6.5.0 Release 6" ETSI STANDARDS, LIS, SOPHIA ANTIPOLIS CEDEX, FRANCE, no. V6.5.0, 1 June 2005 (2005-06-01), pages 1-40, XP014030762 ISSN: 0000-0001
- "Universal Mobile Telecommunications System (UMTS); Generic Authentication Architecture (GAA); Access to network application functions using Hypertext Transfer Protocol over Transport Layer Security (HTTPS) (3GPP TS 33.222 version 6.4.0 Release 6); ETSI TS 133 222" ETSI STANDARDS, LIS, SOPHIA ANTIPOLIS CEDEX, FRANCE, vol. 3-SA3, no. V6.4.0, 1 January 2005 (2005-01-01), XP014030763 ISSN: 0000-0001

## Description

### FIELD OF THE INVENTION

The present invention relates to the technical field of 3GPP Generic Authentication Architecture (GAA), particularly to a method, a system, and a device for negotiating a cipher key shared between a User Equipment (UE) and peripheral equipment.

### BACKGROUND OF THE INVENTION

In the third-generation radio communication standard, GAA is a generic architecture that is used by a variety of application service entities to accomplish subscriber identity authentication; with GAA, the subscribers of the application services may be checked and authenticated. The above application services may be a multicast or broadcast service, a subscriber certificate service, an instant messaging service, or a proxy service, etc.

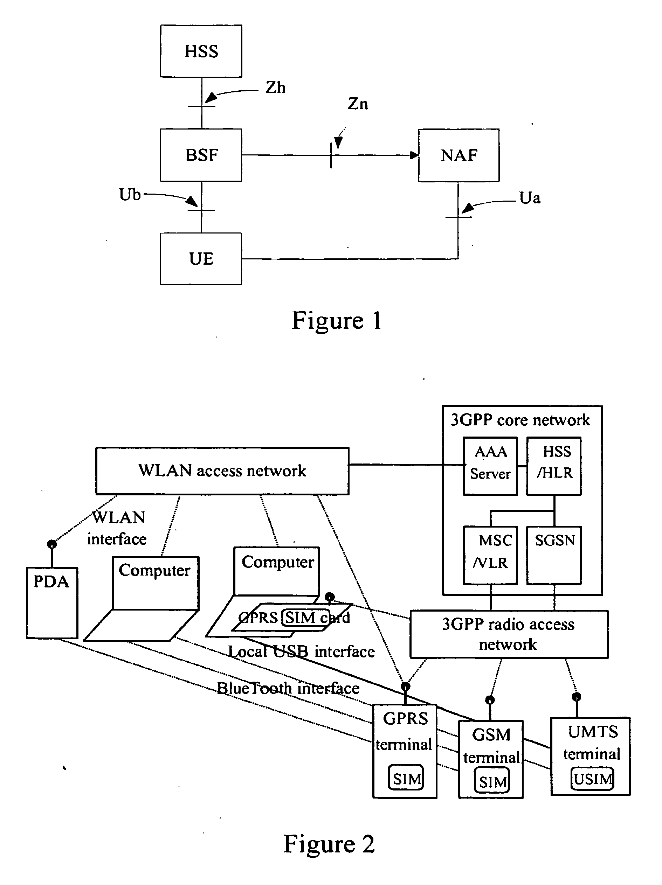

Figure 1 shows the structure of GAA. GAA usually includes a UE, a Bootstrapping Server Function (BSF) entity that checks and authenticates initially a subscriber identity, a Home Subscriber System (HSS), and a Network Application Function (NAF) entity. The BSF is designed to authenticate the identity with the UE mutually and generate a key, Ks shared between the BSF and the UE; the HSS stores Profiles that describe subscriber information and may create authentication information. The interfaces between the entities are shown in Figure 1. In this context, the BSF, NAF, and HSS may be uniformly referred to as the network side.

When the subscriber needs to use a service, if the subscriber knows a mutual authentication process shall be performed with the BSF for the service, the UE contact to the BSF directly; otherwise, the UE contacts first the NAF corresponding to the service, in this case, if the NAF using GAA finds the UE has not completed a mutual authentication with the BSF, the NAF notifies the UE to initiate the authentication with the BSF.

The mutual authentication between the UE and the BSF is a Bootstrapping authentication in Generic Bootstrapping Architecture (GBA), which includes the following procedures: the UE sends an authentication request to the BSF; upon reception of the authentication request, the BSF obtains the authentication information of the subscriber from the HSS first; after obtaining the authentication information, the BSF implements the mutual authentication and key negotiation with the UE using HTTP digest AKA protocol, so as to accomplish the mutual identity authentication and the generation of a key Ks shared between the UE and the BSF; in addition, the BSF defines a valid period for the shared key Ks so as to be updated periodically. The shared key Ks is used as a root key from which a key for encrypting communication may be derived.

Next, the BSF assigns a Bootstrapping Transaction Identifier (B-TID) and sends it to the UE; the B-TID is correlated to the Ks and may be used to identify the Ks; in addition, the B-TID includes the valid period of the Ks.

Upon reception of the B-TID, the UE re-sends to the NAF a connection request in which the B-TID is carried; at the same time, the UE calculates a key Ks_NAF derived from the Ks.

Upon reception of the connection request, the NAF searches locally for the B-TID; if the B-TID is not found locally, the NAF sends to the BSF a query message in which the NAF ID and B-TID are carried. If the BSF does not find the B-TID locally, it notifies the NAF that the subscriber information is unavailable locally; in this case, the NAF notifies the UE to re-authenticate with the BSF. When the BSF finds the B-TID, it calculates a cipher key (NAF specific key) derived from the Ks by using the same algorithm as that used at the UE side, and sends to the NAF a success response message in which the B-TID required by the NAF, the NAF specific key corresponding to the B-TID, and the valid period of the NAF specific key set by the BSF are included. Upon reception of the Success response message from the BSF, the NAF deems that the subscriber is a legal subscriber authenticated by the BSF; accordingly, the key Ks_NAF derived from the Ks is shared between the NAF and the UE.

As a result, the NAF and the UE communicate with each other in an encrypted manner with the Ks_NAF in the subsequent communication process.

When the UE finds the Ks is to expire, or the NAF requests the UE to re-authenticate with the BSF, the UE repeats the above procedures to re-authenticate with the BSF, in order to obtain a new shared key Ks and a derived key Ks_NAF.

It is to be noted, for a GBA_ME process, the above UE refers to a Mobile Equipment (ME). For a GBA_U process, the above UE refers to a user identification module, Universal Integrated Circuit Card (UICC) in the Mobile Equipment, and the generated Ks_NAF includes two derived keys: a key Ks_int_NAF for the UICC, and a key Ks_ext_NAF for the ME.

With developments of network technologies, and drive of market demands, network convergence has become a focus among people. From the aspect of future development, multi-network convergence enables the subscribers to use any UE (mobile station, PDA, PC, etc.) to access the networks in any manner (WLAN, DSL, GPRS, etc.) with a unique number and a unique account bill. In other words, a subscriber may have a variety of UEs, which share the subscriber information corresponding to one UE of the subscriber, such as the subscriber information corresponding to the UICC (SIM, USIM, etc.) or ME of a UE.

For example, in the case that the subscriber information corresponding to the UICC is shared, the UICC is embedded into a specific UE (e.g. a mobile phone or other card reader) in a fixed manner, and other UEs (also referred to as peripheral equipment) are connected to the specific UE via a local interface (such as a USB, Bluetooth, or an infrared interface) to communicate and share the subscriber information corresponding to the same UICC. Figure 2 shows a schematic diagram of authenticating with the UICC application information (USIM) by a WLAN UE to access the WLAN in the case of convergence between WLAN and 3GPP.

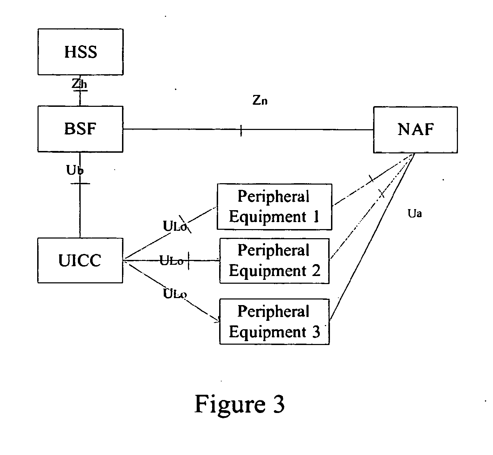

Figure 3 shows the GAA architecture corresponding to Figure 2. This is a case that the NAF application clients are separated from the UE, and in particular, a mobile subscriber has a plurality of UEs (a mobile phone and other UEs, such as a PC, a WLAN UE and a Palm PC) and these UEs access network services with the subscriber information corresponding to a same User subscription. In this case, the NAF application clients are not in the UE but in one or more peripheral equipment other than the UE, while the GBA function which may implement bootstrapping procedure with BSF is still in the UE.

Because the peripheral equipment uses the subscriber information corresponding to the UE for authentication so as to access the NAF, some confidential information (such as network authentication parameters) are necessarily to be transferred via the local interfaces between the peripheral equipment and the UE. However, no appropriate method is available yet to protect the information at present, because the subscriber may not anticipate which equipment accesses the UE when he/she purchases the UICC card or UE, and therefore, the subscriber may not pre-store the keys shared with all the peripheral equipment in the UE. Because no protective key exists for information transmission between the peripheral equipment and the UE, it is difficult to implement encrypted information transmission between the UE and the peripheral equipment.
"GAA-based terminal to UICC key establishment" of GEMPLUS ET AL discloses a method for establishing a shared secret between a Mobile Equipment and a UICC containing a USIM application. Establishing of different keys between the UE and multiple peripheral equipments is not disclosed.
3GPP TR 33.817 V6.1.0 deals with cases where the user equipment (UE) combination contains at least one MT and may also contain one or more TEs. The goal of this report is to identify usage models related to (U)SIM security reuse.
3GPP TS 33.330 version 6.5.0 Release 6 describes the security features and a mechanism to bootstrap authentication and key agreement for application security from the 3GPP AKA mechanism, which includes a generic AKA bootstrapping function, an architecture overview and the detailed procedure how to bootstrap the credential.
3GPP TS 33.222 version 6.4.0 Release 6 specifies secure access methods to Network Application Function (NAF) using HTTP over TLS in the GAA. The document describes both direct access to an Application Server (AS) and access to an Application Server through an Authentication Proxy (AP).

### SUMMARY OF THE INVENTION

An embodiment of the present invention provides a method, system, and device for negotiating a shared key between a UE and peripheral equipment under GAA architecture so as to realize secure communication via the local interfaces between the peripheral equipment and the UE.

The method for negotiating a shared key between a UE and peripheral equipment according to an embodiment of the invention includes:

sending, by the peripheral equipment, to the UE a key negotiation request in which a peripheral equipment identity is carried;

calculating, by the UE, a first local interface shared key, Ks_Local, in accordance with the peripheral equipment identity and a key shared between the UE and the BSF entity, the BSF entityimplementing an initial check and authentication for a subscriber identity; and

calculating, by a network side, a second local interface shared key, Ks_Local, in accordance with the key shared between the UE and the BSF and the obtained ID of the peripheral equipment, and providing the second local interface shared key to the peripheral equipment,
whereby the User Equipment and the peripheral equipment may communicate with each other in an encrypted manner using respectively the first and the second local interface shared key, Ks_Local.

The system for negotiating a shared key between a UE and peripheral equipment provided by an embodiment of the present invention includes:

peripheral equipment configured to send to the UE a key negotiation request in which a peripheral equipment identity is carried;

a UE configured to calculate a first local interface shared key in accordance with a key shared between the UE and the BSF entity implementing an initial check and authentication for a subscriber identity, and the peripheral equipment identity, upon reception of the key negotiation request sent from the peripheral equipment; and

a network side entity configured to calculate a second local interface shared key in accordance with the key shared between the UE and the BSF and the obtained the peripheral equipment identity, and to provide the second local interface shared key to the peripheral equipment.

The UE connected to the peripheral equipment according to an embodiment of the present invention includes:

a local interface key deriving function module, configured to calculate the local interface key in accordance with the key shared between the UE and the BSF entity implementing an initial check and authentication for the subscriber identity, and the peripheral equipment identity connected to the local interface.

The BSF provided in an embodiment of present invention is configured to calculate the local interface key between the UE and the peripheral equipment, including:

a local interface key deriving function module, configured to calculate the local interface key in accordance with the key shared between the BSF and the LTE, and the ID of the peripheral equipment connected to the UE, and to provide the local interface key to a NAF.

The local interface key deriving function entity at the network side provided in an embodiment of the present invention, is configured to calculate the local interface key between the UE and the peripheral equipment, including:

a first local interface key deriving function module, located in the BSF implementing an initial check and authentication for the subscriber identity, and configured to calculate a derived key in accordance with the key shared between the BSF and the UE; and

a second local interface key deriving function module, located in the NAF and configured to calculate the local interface key in accordance with the derived key calculated by the first local interface key deriving function module and the obtained the peripheral equipment identity.

It can be seen from above technical solution that, the negotiation of the key shared between the UE and the peripheral equipment is implemented in the embodiments of the present invention, and thereby information transmission between the UE and the peripheral equipment may be encrypted with the shared key, so as to prevent the data transmitted via the local interface from being tampered or stolen.

Specifically, GAA architecture is employed in the present invention to negotiate dynamically the key shared between the UE and the peripheral equipment and key update may be supported, and therefore an encrypted communication between the UE and the peripheral equipment may be implemented. According to the present invention, it is unnecessary to configure a fixed long-term key for communication between each of the peripheral equipment and the UE. In addition, because the GBA function is already supported by the UICC/ME in UE, the negotiation of the local interface key by GAA method is virtually reuse of the GBA process on the UICC/ME in UE, which does not affect the existing functions.

### BRIEF DESCRIPTION OF THE DRAWINGS

Figure 1 is a schematic diagram of GAA architecture;

Figure 2 is a schematic diagram of authenticating with SIM to access WLAN in a local interface by peripheral equipment in a 3G-WLAN network;

Figure 3 is a schematic diagram of GAA architecture in the case that the NAF application client is separated from the GBA client;

Figure 4 is a flow diagram of negotiating a key between a UE and peripheral equipment with GAA in one embodiment of the present invention; and

Figure 5 is a flow diagram of key negotiation between a UE and peripheral equipment with GAA in another embodiment of the present invention.

### DETAILED DESCRIPTION OF THE EMBODIMENTS

The present invention is further described in detail in conjunction with the embodiments and accompanying drawings. It is to be understood that the embodiments described here are only provided to explain the present invention instead of limiting the present invention in any way.

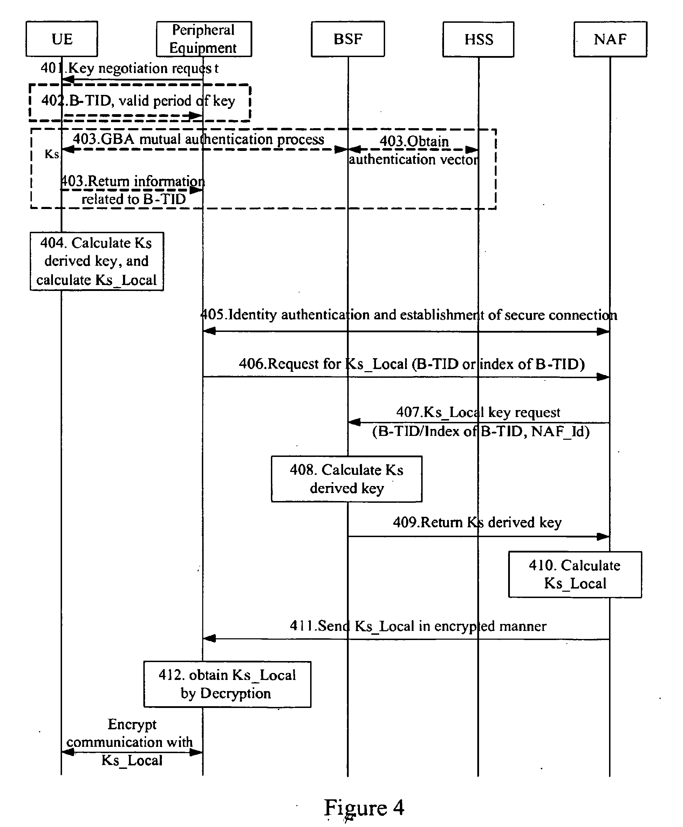

Figure 4 shows a flow diagram of negotiating a key between a UE and peripheral equipment with GAA in one embodiment of the present invention, where the NAF serves as a key server for negotiating the shared key Ks_Local between the UE and the peripheral equipment used over the local interface, and sends the local interface shared key Ks_Local to the peripheral equipment. When the NAF communicates with the peripheral equipment, a public key/symmetric key of the peripheral equipment may be used for integrity and digital signature protection. The secret data sent from the NAF to the peripheral equipment may be protected by a random key generated by the NAF, where the transmission of the random key may be encrypted with the public key/symmetric key of the peripheral equipment.

In this embodiment, the UE and the peripheral equipment shown belong to the same subscriber; for example, when a UICC is used in the UE, the method provided in the embodiment of the present invention includes the following steps:

At Step 401, when initiating an communication with the UICC, the peripheral equipment judges first whether a valid local interface key Ks_Local shared with the UE is stored locally; if a valid local interface key Ks_Local shared with the UE is stored locally, the peripheral equipment encrypts the communication with the UE directly with the key Ks_Local and exits the flow; otherwise, the peripheral equipment sends to the UE a GBA key negotiation request in which the equipment identity identifying the peripheral equipment is carried;

Particularly, the equipment identity is used by the UE to identify the peripheral equipment or an application in the peripheral equipment. The peripheral equipment identity may be one of the following:

An index preconfigured in the UICC/ME, used by the UICC/ME to search locally for its equipment ID information or the ID information of an application in the equipment;

or, the equipment ID or application ID per se.

Particularly, the equipment ID may be a user name or password corresponding to the peripheral equipment, especially be a hardware ID of the equipment, depending on the peripheral equipment management scheme.

At Step 402, upon reception of the connection request from the peripheral equipment, the UICC in the UE judges whether the shared key Ks negotiated with the BSF is stored locally; if the shared key Ks is stored locally, the UICC returns the B-TID of the key (or, plus the valid period of Ks) and executes step 404, otherwise executes step 403.

Usually, the B-TID is only equivalent to an index to Ks and therefore may be sent in plain text, for example, the B-TID may be forwarded by the UICC via the ME with card inserted to the peripheral equipment or sent directly by the ME to the peripheral equipment.

If the B-TID is not to be sent directly via the local interface, an index by which the B-TID may be identified in the network may be sent to the peripheral equipment. Then, the network may obtain the B-TID corresponding to the index.

The index may be negotiated between the UICC/ME and the NAF via the Ua interface, in this case, the NAF needs to store the mapping relationship between the B-TID and the index; or, the index may be negotiated between the UICC/ME and the BSF via the Ub interface, and in this case, the BSF assigns a B-TID and an index corresponding to the B-TID to the UICC/ME at the end of the Bootstrapping process.

At Step 403, the UE and the BSF execute a mutual authentication (GBA) process, so as to accomplish a mutual identity authentication and negotiation of the shared key Ks with the BSF. The BSF defines a valid period for the shared key Ks, assigns a B-TID for identifying the shared key Ks, and sends the valid period and the B-TID to the UICC. The GBA process may further include a step at which the BSF obtains a subscriber's authentication information from the HSS; because the GBA process is a well-known technique, which is not described further here.

The method further includes the following step before the UE executes above process, i.e. if the B-TID is not received or the B-TID received is invalid, the peripheral equipment sends an instruction for GBA renegotiation to the UE.

When the Ks expires, Step 402 is returned and the GBA process is executed again to generate a new Ks through negotiation.

It is to be noted that after a new GBA process is executed, the peripheral equipment needs to obtain a new B-TID. To obtain the new B-TID, the step 401 may be executed again, i.e. the peripheral equipment re-sends a request, and the UICC sends the B-TID to the peripheral equipment upon reception of the request. Or, after the GBA negotiation process, the UICC sends the B-TID directly to the peripheral equipment.

At Step 404, the UICC calculates the key Ks_int_NAF derived from Ks with Ks and "gba-u"∥RAND ∥IMPI ∥NAF_Id as the parameter, where Ks_int_NAF=KDF (Ks, "gba-u"∥RAND∥IMPI∥NAF_Id). If a Ks_int_NAF corresponding to the key center NAF for negotiation of the local interface key exists in the UICC, the UICC does not need to re-calculate the Ks_int_NAF; instead, the existing Ks_int_NAF may be used to perform the subsequent derivation calculation.

Next, the UICC may derive the Ks_local from the calculated Ks_int_NAF. For example, the local interface shared key Ks_Local (also referred to the first local interface shared key) between the UE and the peripheral equipment may be calculated from the parameters of the calculated Ks_int_NAF, equipment ID of the peripheral equipment/ID of applications on the peripheral equipment, and the ID NAF_Id of the key server, where Ks_Local=KDF (Ks_int_NAF, NAF_Id∥equipment ID). The Ks_Local may further include a random number, for example, Ks_Local=KDF (Ks_int_NAF, NAF_Id∥equipment ID∥RAND).

The RAND above is a random number; IMPI refers to the private ID of IP multimedia of a subscriber; NAF_Id refers to the ID of the key server NAF; "gba-me" and "gba-u" represent character strings; KDF is the abbreviation of Key Deriving Function.

Particularly, the UICC may store the Ks_Local, with the equipment ID as the index; or, the UICC may not store the Ks_Local but create it temporarily whenever required.

The UICC may obtain the ID of the key server NAF through either of the following two ways:

Firstly, because the number of servers that are specially used for negotiation between the UICC and the peripheral equipment is limited in Operator's network, the NAF_Id for key negotiation in an Operator's network may be a fixed value. The NAF_Id may be obtained by configuring it directly on the peripheral equipment and then sending it to the UTCC.

Alternatively, the NAF_Id may be pre-assigned according to a numbering specification, so that it may be deduced from the subscriber ID for the UICC application (e.g. IMSI for USIM application, IMPI for ISIM application). For example, if IMSI is "234150999999999", according to the existing numbering specification, MCC=234, MNC=15, MSIN=0999999999, and the NAF address may be "naf.mnc015.mcc234.3gppnetwork.org".

If IMPI, "user@operatorcom" is used as the subscriber ID, the NAF address may be "naf.operator.com".

Before above procedure is executed, the method may further include the following step, i.e. the peripheral equipment sends to the UICC a request for calculating the local interface key. In addition, the NAF_Id and the peripheral equipment ID may also be carried in the request.

It is to be noted that, the step 404 in which the local interface key is calculated at the UICC side is separated from the procedure in which the local interface key is calculated at the network side and sent to the peripheral equipment; therefore, it may be executed at any time before or after the step 405.

At Steps 405∼406, after the peripheral equipment receives the B-TID, the identity authentication for the peripheral equipment is carried out between the NAF and the peripheral equipment, and a secure connection to the NAF is established. The peripheral equipment sends a Ks_Local key request to the NAF via the established secure connection, and the B-TID and the equipment identity of the peripheral equipment are carried in the request message.

If the equipment identity is an index to the peripheral equipment ID information, the BSF or NAF at the network side need to store the mapping relationship between the index and the peripheral equipment ID, so that the equipment sending the request may be identified in the network.

In order to ensure security of information transmission, especially the key distribution between the peripheral equipment and the NAF and ensure the peripheral equipment is legal equipment authenticated by the Operator, the identity of the peripheral equipment is authenticated by the NAF; in order to prevent the key from being stolen in the key distribution process, the key is distributed in an encrypted manner, i.e. a secure connection is established between the NAF and the peripheral equipment. Particularly, there are the following two cases:

Case 1: If the peripheral equipment has a public key certificate trusted by the Operator's network, the request message may be digitally signed with the private key of the peripheral equipment. Upon reception of the request message, the NAF searches for the public key of the peripheral equipment, and authenticates the digital signature with the public key. This may ensure the peripheral equipment which communicates with the NAF is the right peripheral equipment indicated by the equipment ID instead of any pseudo peripheral equipment.

In the case of the above, a Transport Layer Security (TLS) connection between the peripheral equipment and the NAF may be established in a TLS authentication mode on the basis of the public key certificate. As a result, the key distribution message may be protected by the TLS connection.

Case 2: If the peripheral equipment does not have a public key certificate trusted by the Operator's network but shares a key K with the Operator's network, the request message may be digitally signed with the key K, and a key index KID needs to be sent together with the B-TID in the request massage from the peripheral equipment to the NAF. Upon reception of the request, the NAF authenticates the digital signature with the key corresponding to the KID. The KID and the peripheral equipment form a one-to-one mapping relationship. For example, if the peripheral equipment ID itself is used as the KID, MAC=H (equipment ID∥B-TID∥K) may be calculated. Upon reception of the request, the NAF finds the key K' corresponding to the equipment ID in accordance with the equipment ID, and then applies HASH calculation for the message: MAC-R=H (equipment ID∥B-TID∥K'); if it is equal, the identity of the requester is the right one indicated by the equipment ID.

In the case of the above, a secure connection between the peripheral equipment and the NAF may be established in any of the following manners:

1) In HTTP digest AKA mode in which the NAF may authenticate the UE in a unidirectional manner, or the NAF and the UE may authenticate each other mutually.

2) In Pre-Shared-Key based TLS (PSK_TLS) mode.

3) In combined HTTP digest AKA and PSK_TLS mode, in which the peripheral equipment establishes a TLS connection to the NAF through the certificate, and sends an http digest message for authenticating itself through the TLS connection, so as to authenticate the identity of the peripheral equipment; and the key distribution message may be protected by the established secure connection.

It is to be noted that the NAF may obtain the equipment identity of the peripheral equipment in other means. For example, the information of the peripheral equipment may be configured in advance locally in the Operator's network, the peripheral equipment or UE informs the Operator's network (e.g. BSF or NAF), in manner of a short message, of characteristic information of peripheral equipment to be used, and the operator's network (e.g. BSF) searches for the equipment ID locally and informs the NAF. Or, the peripheral equipment or UE may inform the NAF of some information of the peripheral equipment by other message, for example, the UE informs the NAF through a secure connection of a Ua interface to initiate specific peripheral equipment.

At Step 407, upon reception of the key request from the peripheral equipment, the NAF sends a key derivation request, in which the B-TID and NAF_Id is carried, to the BSF if the Ks_int_NAF does not exist locally.

At Step 408, after finding the key Ks shared with the UICC from the B-TID, the BSF calculates the key Ks_int_NAF derived from the Ks by the same algorithm as that used at the UICC side, with the Ks and "gba-u"∥RAND∥IMPI∥NAF_Id as the parameters.

At Step 409, the BSF returns the generated Ks_int_NAF to the NAF.

At Step 410, the NAF calculates the local interface shared key Ks_Local (also referred to as the second local interface shared key) by the same algorithm as that used at the UE side, with the received Ks_int_NAF, equipment identity, and NAF_Id as the parameters, i.e. Ks_Local=KDF (Ks_int_NAF, NAF_Id∥equipment identity).

At Step 411, the NAF sends the calculated local interface shared key Ks_Local to the peripheral equipment. In order to protect the Ks_Local from being sniffered, the Ks_Local may be transmitted in an encrypted manner.

The Ks_Local may be encrypted with the encryption algorithm and the key negotiated in the secure connection establishment process in Step 405∼406 and transmitted, or protected with a derived key, for example:

The NAF encrypts the Ks_Local with a generated random number R which serves as a key, i.e. Ks_Local*=ER (Ks_Local), for example, Ks_Local*=Ks_Local^{○} , † R, or, the NAF may encrypt the Ks_Local with other encryption algorithm, such as AES algorithm, where the random number R serves as a key.

The NAF also needs to encrypt the random number R and then send it with the encrypted Ks_Local* together, i.e. the NAF sends the Ks_Local* and R* to the peripheral equipment. The random number R may be encrypted with the following encryption algorithm:

If the peripheral equipment has a pair of a public/private key (Kp, Ki) trusted by the Operator's network and a public key certificate of Kp, the random number R may be encrypted with the public key algorithm Kp of the peripheral equipment, i.e. R*=EKp(R).

If the peripheral equipment has a symmetric key K sent from the Operator, the NAF may find the key K from the key index KID sent from the peripheral equipment and then encrypt the random number R with the key K, i.e. R*=EK(R).

At Step 412, the peripheral equipment decrypts with the key corresponding to the encryption algorithm in Step 411 to obtain the Ks_local.

For example, the peripheral equipment may obtain the Ks_Local through decryption upon reception of the Ks_Local* and R*. Corresponding to Step 411, in particular, the process includes:

First, the peripheral equipment obtains R by decrypting R*. In particular, if a public key encryption algorithm is used, the peripheral equipment may decrypt with the corresponding private key Ki, i.e. R=DKi(R*); if a symmetric encryption algorithm is used, R=DK(R*).

Next, the peripheral equipment may obtain Ks_Local by decrypting Ks_Local* with R which serves as the key, i.e. Ks_Local=DR(Ks_Local*).

Up to now, the shared key (Ks_Local) negotiation process between the UICC and the peripheral equipment is accomplished, and the peripheral equipment and the UICC may communicate with each other in an encrypted manner with the shared key as the local interface key.

In addition, a valid period may be set for the Ks_Local above and stored in the UICC or peripheral equipment. When the valid period ends, a new Ks_Local is generated.

It is to be noted that, in the above embodiments, the UICC has GBA function (i.e. a GBA_U process) and the Ks_local is calculated in the UICC. The derived keys calculated by the UICC include Ks_ext_NAF and Ks_int_NAF, for example, Ks_ext_NAF=KDF (Ks, "gba-me"∥RAND∥IMPI∥NAF_Id); Ks_int_NAF=KDF(Ks, "gba-u"∥RAND∥IMPI∥ NAF_Id). In the above embodiments, the Ks_local is calculated by selecting Ks_int_NAF by the UICC, it is to be understood that the Ks_local may also be calculated by selecting Ks_ext_NAF by the ME. In addition, the method above for calculating the local interface key by the UICC is also applicable to negotiation of interface key between the UICC and the ME. During the process of interface key negotiation between the UICC and the ME, the ME takes the role of the peripheral equipment.

In the case that the Ks is stored in the ME (i.e. a GBA_ME process), the ME may calculate the derived key Ks_NAF, for example, Ks_NAF=KDF (Ks, "gba-me"∥RAND∥IMPI∥NAF_Id). Then, the ME may calculate the Ks_Local with the Ks_NAF. The principle is identical to that in the forementioned case, and therefore is not described any more. This is a key negotiation process between the ME in UE and the peripheral equipment instead of between the UICC in UE and the peripheral equipment.

In addition, it is to be noted that in this embodiment, the Ks_Local calculation process includes two steps; however, those skilled in the art shall understand, the calculation process may include only one step, for example, Ks_Local=KDF (Ks, "gba-u"∥RAND∥IMPI∥NAF_Id∥equipment ID); for the UICC, the Ks_Local may be calculated by the UICC; for the BSF and NAF, the Ks_Local may be calculated by either or both of BSF and NAF.

It can be seen from the above that, the key negotiation between UE and peripheral equipment may be implemented and thereby an encrypted communication between them may be implemented in the present invention. In addition, when different peripheral equipment communicates with the UICC, different keys may be generated to different peripheral equipment for the encrypted communication.

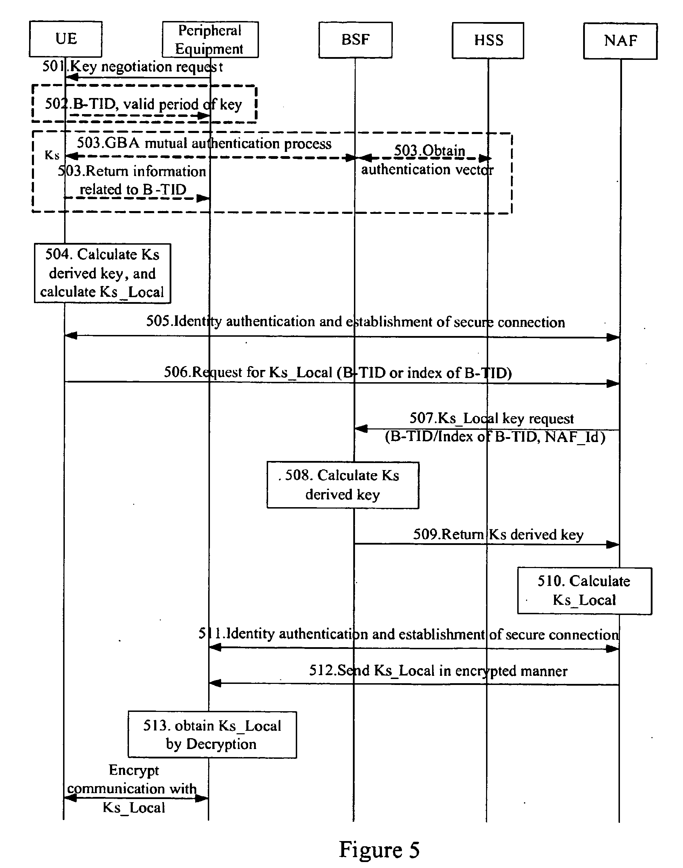

Figure 5 is a flow diagram of another embodiment of key negotiation between UE and peripheral equipment with GAA architecture. As shown in Figure 5, in this embodiment, both the UE and the peripheral equipment shown belong to the same subscriber. For example, if a UICC is used in the UE, the process includes the following steps:

The implementation of Steps 501-504 is identical to that of Steps 401-404, and therefore is not described further here.

At Steps 505-506, after the UE returns the B-TID to the peripheral equipment, identity authentication for the UE is carried out between the UE and the NAF, and a secure connection via an Ua interface to the NAF is established; the UE sends a Ks_local key request to the NAF through the established secure connection via the Ua interface to request the NAF to calculate the Ks_local, and then sends the obtained Ks_local to the peripheral equipment.

The implementation of Steps 507∼510 is identical to that of Steps 407∼410, and therefore is not described further here.

At Step 511, before sending the key to the peripheral equipment, the NAF authenticates the peripheral equipment and establishes a secure connection with the peripheral equipment.

Optionally, the peripheral equipment may authenticate the NAF, i.e. the NAF and the peripheral equipment may authenticate each other mutually.

The process of authentication and establishment of secure connection between the NAF and the peripheral equipment is identical to that of Steps 405 and 406, and therefore is not described further here.

The implementation of Steps 512∼513 is identical to that of Steps 411∼412, and therefore is not described further here.

It can be seen from the flow diagrams of the two embodiments shown in Figure 4 and Figure 5, the main difference between the two embodiments lies in the entity that initiates the Ks_Local key request to the NAF, i.e. the entity may be the peripheral equipment shown in Figure 4 or the UE shown in Figure 5. If the entity that initiates the Ks_Local key request is the peripheral equipment, the authentication (i.e. establishment of the secure connection) is executed between the NAF and the peripheral equipment before the Ks_Local key is requested; if the entity that initiates the Ks_Local key request is the UE, the authentication (i.e. establishment of the secure connection) is executed between the NAF and the UE before the Ks_Local key is requested.

The present invention further discloses a UE, which is connected to the peripheral equipment and includes a local interface key deriving function module configured to calculate the local interface key in accordance with the key Ks shared between the UE and the entity BSF which implements the initial check and authentication for the subscriber identity, and the equipment identity of the peripheral equipment connected to the UE.

The present invention further discloses a BSF configured to calculate the local interface key between the UE and the peripheral equipment separately. The BSF includes a local interface key deriving function module configured to calculate the local interface key in accordance with the key Ks shared between the BSF and the UE, and the obtained equipment identity of the peripheral equipment that is connected to the UE, and to provide the local interface key to the NAF entity.

The present invention further discloses a local interface key deriving function entity at the network side, which is configured to calculate the local interface key between the UE and the peripheral equipment, and includes:

a first local interface key deriving function module located in the BSF entity implementing an initial check and authentication for the subscriber identity and configured to calculate a Ks derived key in accordance with the key Ks shared between the BSF and the UE; and

a second local interface key deriving function module located in the NAF entity and configured to calculate the local interface key in accordance with the Ks derived key calculated by the first local interface key deriving function module and the obtained peripheral equipment identity.

While the present invention has been illustrated and described with reference to some exemplary embodiments, the present invention is not limited to these. Those skilled in the art shall recognize that various modifications, substitutions and improvements may be made without departing from the scope of the present invention as defined by the accompanying claims.

## Claims

1. A method for negotiating a key shared between a User Equipment, UE, and peripheral equipment, **characterized by** comprising,
sending (401, 501), by the peripheral equipment, to the UE a key negotiation request in which a peripheral equipment identity is carried;
calculating (404, 504), by the UE, a first local interface shared key, Ks_Local, in accordance with the peripheral equipment identity and a key shared between the UE and a Bootstrapping Server Function, BSF, the BSF entity implementing an initial check and authentication for a subscriber identity;
receiving (411, 512), by the peripheral equipment, a second local interface shared key, Ks_Local, which is calculated by a network entity in accordance with the peripheral equipment identity and the key shared between the UE and the BSF,
whereby the User Equipment and the peripheral equipment may communicate with each other in an encrypted manner using respectively the first and the second local interface shared key, Ks_Local.

2. The method according to claim 1, wherein,
the peripheral equipment identity (401, 501) is one of the following:
an index value corresponding to the equipment Identification pre-configured in the Universal Integrated Circuit Card, UICC, or Mobile Equipment, ME, in the UE;
the equipment Identification or application Identification.

3. The method according to claim 1 or 2, further comprising the following steps before receiving a second local interface shared key by the peripheral equipment,
obtaining (403), by the peripheral equipment, a Bootstrapping Transaction Identifier, B-TID for identifying the shared key or an index corresponding to the B-TID from the UE;
sending (406), by the peripheral equipment, to the Network Application Function, NAF, at the network side a key request in which the peripheral equipment identity and the B-TID or the index corresponding to the B-TID is carried;
determining (407, 408) the key shared between the UE and the BSF in accordance with the B-TID or the index corresponding to the B-TID at the network side.

4. The method according to claim 3, further comprising the following step before the peripheral equipment sends the key request to the NAF,
carrying out (405) identity authentication and establishing a secure connection between the peripheral equipment and the NAF.

5. The method according to claim 1 or 2, further comprising the following steps before receiving a second local interface shared key by the peripheral equipment,,
sending (506), by the UE, to the NAF at the network side a key request in which the peripheral equipment identity and the B-TID or the index corresponding to the B-TID is carried;
determining (507, 508) the key shared between the UE and the BSF at the network side base on the B-TID or the index corresponding to the B-TID.

6. The method according to claim 5, further comprising the following step before the UE sends the key request to the NAF,
carrying out (505) identity authentication and establishing a secure connection between the UE and the NAF.

7. The method according to claim 6, further comprising the following step before receiving a second local interface shared key by the peripheral equipment,
carrying out (511) identity authentication and establishing a secure connection, between the peripheral equipment and the NAF.

8. The method according to claim 6 or 7, wherein, the identity authentication method, in particular, comprises one of the following,
carrying out (505, 511) the identity authentication in Pre-Shared-Key based Transport Layer Security, PSK_TLS mode;
carrying out (505, 511) the identity authentication in Shared-key based http digest authentication mode;
or, carrying out (505, 511) the identity authentication in http digest over TLS mode.

9. The method according to claim 6, 7, or 8, wherein, the method for establishing a secure connection comprises,
establishing (505, 511) a TLS connection in TLS authentication mode in accordance with the public key certificate.

10. The method according to any one of claims 1 to 9, wherein, the procedure for receiving , by the peripheral equipment , a second local interface shared key which is calculated by the network entity in accordance with the key shared between the UE and the BSF and the peripheral equipment identity, comprises ,
calculating (408), by the BSF at the network side, the second local interface shared key at the request of the NAF;
sending (411), by the NAF at the network side, the second local interface shared key to the peripheral equipment; or
calculating (508), by the BSF at the network side, a derived key according to the shared key, at the request of the NAF;
calculating (510, 512), by the NAF at the network side, the second local interface shared key in accordance with the derived key and the peripheral equipment identity, and sending the second local interface key to the peripheral equipment.

11. The method according to any one of claims 1 to 10, wherein, in the process of calculating the first local interface shared key, the NAF Identification is the Identification of NAF received by the UE from the peripheral equipment; or,
the mapping relationship (404, 504) between the NAF Identification and the Identification of UICC or ME in the UE is pre-configured in the UE, wherein, the NAF Identification is deduced from the UICC or ME by the UE.

12. A system for negotiating a key shared between a User Equipment, UE, and peripheral equipment, **characterized by** comprising means for performing the method according to any one of claims 1 to claim 11.

13. A User Equipment, UE (404, 504), connected to peripheral equipment, **characterized by** comprising,
a local interface key deriving function module, configured to calculate the local interface key in accordance with an peripheral equipment identity connected to the UE and a key shared between the UE and a Bootstrapping Server Function, BSF, entity implementing an initial check and authentication for a subscriber identity.

14. A Bootstrapping Server Function, BSF (408,508), entity implementing an initial check and authentication for a subscriber identity, configured to calculate a local interface key between a User Equipment, UE, and peripheral equipment, **characterized by** comprising,
a local interface key deriving function module, configured to calculate the local interface key in accordance with the key shared between the BSF and the UE, and the obtained peripheral equipment identity connected to the UE, and to provide the local interface key to a Network Application Function, NAF, entity.

15. A local interface key deriving function entity at the network side for calculating a local interface key between a User Equipment, UE (404, 504), and peripheral equipment (401,501),
a first local interface key deriving function module, located in a Bootstrapping Server Function, BSF (408, 508), entity implementing an initial check and authentication for a subscriber identity, and being configured to calculate a derived key from a key shared between the BSF and a UE; **characterized in that**:
a second local interface key deriving function module, located in a Network Application Function, NAF (410, 510), entity and is configured to calculate the local interface key in accordance with an obtained peripheral equipment identity and the derived key calculated by the first local interface key deriving function module.

## Patentansprüche

1. Verfahren zum Aushandeln eines zwischen einem Benutzergerät UE und einem Peripheriegerät gemeinsam benutzten Schlüssels, **gekennzeichnet durch** die folgenden Schritte:
Senden (401, 501) einer Schlüsselaushandlungsanforderung **durch** das Peripheriegerät zu dem UE, in der eine Peripheriegeräteidentität geführt wird;
Berechnen (404, 504) eines ersten gemeinsam benutzten Schlüssels der lokalen Schnittstelle Ks_Local **durch** das UE gemäß der Peripheriegeräteidentität und einem zwischen dem UE und einer Bootstrapping Server Function BSF gemeinsam benutzten Schlüssel, wobei die BSF-Entität eine anfängliche Prüfung und Authentifizierung für eine Teilnehmeridentität implementiert;
Empfangen (411, 512) eines zweiten gemeinsam benutzten Schlüssels der lokalen Schnittstelle Ks_Local, **durch** das Peripheriegerät, der **durch** eine Netzentität gemäß der Peripheriegeräteidentität und dem zwischen dem UE und der BSF gemeinsam benutzten Schlüssel berechnet wird,
wobei das Benutzergerät und das Peripheriegerät auf verschlüsselte Weise unter Verwendung des ersten bzw. des zweiten gemeinsam benutzten Schlüssels der lokalen Schnittstelle Ks_Local miteinander kommunizieren können.

2. Verfahren nach Anspruch 1, wobei
die Peripheriegeräteidentität (401, 501) eine der folgenden Alternativen ist:
ein Indexwert, der der in der Universal Integrated Circuit Card UICC oder dem Mobile Equipment ME in dem UE vorkonfigurierten Geräteidentifikation entspricht;
die Geräteidentifikation oder Anwendungsidentifikation.

3. Verfahren nach Anspruch 1 oder 2, ferner mit den folgenden Schritten vor dem Empfangen eines zweiten gemeinsam benutzten Schlüssels der lokalen Schnittstelle durch das Peripheriegerät:
Erhalten (403) eines Bootstrapping Transaction Identifier B-TID zum Identifizieren des gemeinsam benutzten Schlüssels oder eines dem B-TID entsprechenden Index durch das Peripheriegerät von dem UE;
Senden (406) einer Schlüsselanforderung durch das Peripheriegerät zu der Network Application Function NAF auf der Netzseite, in der die Peripheriegeräteidentität und der B-TID oder der dem B-TID entsprechende Index geführt wird;
Bestimmen (407, 408) des zwischen dem UE und der BSF gemeinsam benutzten Schlüssels gemäß dem B-TID oder dem dem B-TID entsprechenden Index auf der Netzseite.

4. Verfahren nach Anspruch 3, ferner mit dem folgenden Schritt, bevor das Peripheriegerät die Schlüsselanforderung zu der NAF sendet:
Ausführen (405) von Identitätsauthentifikation und Herstellen einer sicheren Verbindung zwischen dem Peripheriegerät und der NAF.

5. Verfahren nach Anspruch 1 oder 2, ferner mit den folgenden Schritten vor dem Empfangen eines zweiten gemeinsam benutzten Schlüssels der lokalen Schnittstelle durch das Peripheriegerät:
Senden (506) einer Schlüsselanforderung durch das UE zu der NAF, in der die Peripheriegeräteidentität und der B-TID oder der dem B-TID entsprechende Index geführt werden;
Bestimmen (507, 508) des zwischen dem UE und der BSF gemeinsam benutzten Schlüssels auf der Netzseite auf der Basis des B-TID oder des dem B-TID entsprechenden Index.

6. Verfahren nach Anspruch 5, ferner mit dem folgenden Schritt, bevor das UE die Schlüsselanforderung zu der NAF sendet:
Ausführen (505) von Identitätsauthentifikation und Herstellen einer sicheren Verbindung zwischen dem UE und der NAF.

7. Verfahren nach Anspruch 6, ferner mit dem folgenden Schritt vor dem Empfangen eines zweiten gemeinsam benutzten Schlüssels der lokalen Schnittstelle durch das Peripheriegerät:
Ausführen (511) von Identitätsauthentifikation und Herstellen einer sicheren Verbindung zwischen dem Peripheriegerät und der NAF.

8. Verfahren nach Anspruch 6 oder 7, wobei das Identitätsauthentifikationsverfahren insbesondere einen der folgenden Schritte umfasst:
Ausführen (505, 511) der Identitätsauthentifikation im Modus der auf dem Pre-Shared-Key basierenden Transport Layer Security PSK_TLS;
Ausführen (505, 511) der Identitätsauthentifikation im Modus der auf Shared-Key basierenden http-Digest-Authentifikation;
oder Ausführen (505, 511) der Identitätsauthentifikation im Modus http-Digest über TLS.

9. Verfahren nach Anspruch 6, 7 oder 8, wobei das Verfahren zum Herstellen einer sicheren Verbindung Folgendes umfasst:
Herstellen (505, 511) einer TLS-Verbindung im TLS-Authentifikationsmodus gemäß dem Public-Key-Zertifikat.

10. Verfahren nach einem der Ansprüche 1 bis 9, wobei die Prozedur zum Empfangen eines zweiten gemeinsam benutzten Schlüssels der lokalen Schnittstelle durch das Peripheriegerät, der durch eine Netzseite gemäß dem zwischen dem UE und der BSF gemeinsam benutzten Schlüssel und der Peripheriegeräteidentität berechnet wird, die folgenden Schritte umfasst:
Berechnen (408) des zweiten gemeinsam benutzten Schlüssels der lokalen Schnittstelle durch die BSF auf der Netzseite auf Anforderung der NAF;
Senden (411) des zweiten gemeinsam benutzten Schlüssels der lokalen Schnittstelle durch die NAF auf der Netzseite zu dem Peripheriegerät; oder
Berechnen (508) eines abgeleiteten Schlüssels durch die BSF auf der Netzseite gemäß dem gemeinsam benutzten Schlüssel auf Anforderung der NAF;
Berechnen (510, 512) des zweiten gemeinsam benutzten Schlüssels der lokalen Schnittstelle durch die NAF auf der Netzseite gemäß dem abgeleiteten Schlüssel und
der Peripheriegeräteidentität und Senden des zweiten Schlüssels der lokalen Schnittstelle zu dem Peripheriegerät.

11. Verfahren nach einem der Ansprüche 1 bis 10, wobei bei dem Prozess des Berechnens des ersten gemeinsam benutzten Schlüssels der lokalen Schnittstelle die NAF-Identifikation die durch das UE von dem Peripheriegerät empfangene Identifikation der NAF ist; oder
die Abbildungsbeziehung (404, 504) zwischen der NAF-Identifikation und der Identifikation von UICC oder ME in dem UE in dem UE vorkonfiguriert ist, wobei die NAF-Identifikation durch das UE aus der UICC oder dem ME deduziert wird.

12. System zum Aushandeln eines zwischen einem Benutzergerät UE und einem Peripheriegerät gemeinsam benutzten Schlüssels, **gekennzeichnet durch** Mittel zum Ausführen des Verfahrens nach einem der Ansprüche 1 bis 11.

13. Benutzergerät UE (404, 504), das mit einem Peripheriegerät verbunden ist, **dadurch gekennzeichnet, dass** es Folgendes umfasst:
ein Funktionsmodul zum Ableiten eines Schlüssels der lokalen Schnittstelle, das dafür ausgelegt ist, den Schlüssel der lokalen Schnittstelle gemäß einer mit dem UE verbundenen Peripheriegeräteidentität und einem zwischen dem UE und einer Entität der Bootstrapping Server Function BSF, die eine anfängliche Prüfung und Authentifikation für eine Teilnehmeridentität implementiert, gemeinsam benutzten Schlüssel zu berechnen.

14. Entität der Bootstrapping Server Function BSF (408, 508), die eine anfängliche Prüfung und Authentifikation für eine Teilnehmeridentität implementiert, die dafür ausgelegt ist, einen Schlüssel der lokalen Schnittstelle zwischen einem Benutzergerät UE und einem Peripheriegerät zu berechnen, **dadurch gekennzeichnet, dass** sie Folgendes umfasst:
ein Funktionsmodul zum Ableiten eines Schlüssels der lokalen Schnittstelle, das dafür ausgelegt ist, den Schlüssel der lokalen Schnittstelle gemäß dem zwischen der BSF und dem UE gemeinsam benutzten Schlüssel und der erhaltenen mit dem UE verbundenen Peripheriegeräteidentität zu berechnen und den Schlüssel der lokalen Schnittstelle einer Entität der Network Application Function NAF zuzuführen.

15. Funktionsentität zum Ableiten eines Schlüssels der lokalen Schnittstelle auf der Netzseite zum Berechnen eines Schlüssels der lokalen Schnittstelle zwischen einem Benutzergerät UE (404, 504) und einem Peripheriegerät (401, 501),
wobei ein Funktionsmodul zum Ableiten eines ersten Schlüssels der lokalen Schnittstelle, das sich in einer Entität der Bootstrapping Server Function BSF (408, 508) befindet, die eine anfängliche Prüfung und Authentifikation für eine Teilnehmeridentität implementiert, dafür ausgelegt ist, einen abgeleiteten Schlüssel aus einem zwischen der BSF und einem UE gemeinsam benutzten Schlüssel zu berechnen; **dadurch gekennzeichnet, dass**
ein Funktionsmodul zum Ableiten eines zweiten Schlüssels der lokalen Schnittstelle, das sich in einer Entität der Network Application Function NAF (410, 510) befindet, dafür ausgelegt ist, den Schlüssel der lokalen Schnittstelle gemäß einer erhaltenen Peripheriegeräteidentität und dem durch das Funktionsmodul zum Ableiten des ersten Schlüssels der lokalen Schnittstelle berechneten abgeleiteten Schlüssel zu berechnen.

## Revendications

1. Procédé de négociation d'une clé partagée entre un équipement utilisateur, UE, et un équipement périphérique, **caractérisé par le fait qu'**il comprend :
l'envoi (401, 501) par l'équipement périphérique, à l'UE, d'une demande de négociation de clé dans laquelle l'identité d'un équipement périphérique est transportée ;
le calcul (404, 504) par l'UE d'une première clé partagée d'interface locale, Ks_Local, en fonction de l'identité de l'équipement périphérique et d'une clé partagée entre l'UE et une fonction de serveur de démarrage, BSF, l'entité BSF mettant en oeuvre une vérification et une authentification initiales de l'identité d'un abonné ;
la réception (411, 512) par l'équipement périphérique d'une seconde clé partagée d'interface locale, Ks_Local, qui est calculée par une entité du réseau en fonction de l'identité de l'équipement périphérique et de la clé partagée entre l'UE et la BSF,
de sorte que l'équipement utilisateur et l'équipement périphérique peuvent communiquer l'un avec l'autre de manière cryptée en utilisant respectivement les première et seconde clés partagées d'interface locale, Ks_Local.

2. Procédé selon la revendication 1, dans lequel
l'identité d'équipement périphérique (401, 501) est l'une des suivantes :
une valeur d'index correspondant à l'identification d'équipement configurée préalablement dans la carte de circuit intégré universelle, UICC, ou dans l'équipement mobile, ME, de l'UE ;
une identification d'équipement ou une identification d'application.

3. Procédé selon la revendication 1 ou 2, comprenant en outre les étapes suivantes avant la réception par l'équipement périphérique d'une seconde clé partagée d'interface locale :
l'obtention (403) par l'équipement périphérique d'un identifiant de transaction de démarrage, B-TID, destiné à identifier la clé partagée ou un index correspondant au B-TID en provenance de l'UE ;
l'envoi (406) par l'équipement périphérique à la fonction d'application de réseau, NAF, au côté réseau, d'une demande de clé dans laquelle l'identité de l'équipement périphérique et le B-TID ou l'index correspondant au B-TID sont transportés ;
la détermination (407, 408) de la clé partagée entre l'UE et la BSF en fonction du B-TID ou de l'index correspondant au B-TID au côté réseau.

4. Procédé selon la revendication 3, comprenant en outre l'étape suivante avant que l'équipement périphérique n'envoie la demande de clé à la NAF :
l'exécution (405) d'une authentification d'identité et l'établissement d'une connexion sécurisée entre l'équipement périphérique et la NAF.

5. Procédé selon la revendication 1 ou 2, comprenant en outre les étapes suivantes avant la réception d'une seconde clé partagée d'interface locale par l'équipement périphérique :
l'envoi (506) par l'UE à la NAF au côté réseau d'une demande de clé dans laquelle l'identité de l'équipement périphérique et le B-TID ou l'index correspondant au B-TID sont transportés ;
la détermination (507, 508) de la clé partagée entre l'UE et la BSF au niveau du côté réseau sur la base du B-TID ou de l'index correspondant au B-TID.

6. Procédé selon la revendication 5, comprenant en outre l'étape suivante avant que l'UE n'envoie la demande de clé à la NAF :
l'exécution (505) de l'authentification d'identité et de l'établissement d'une connexion sécurisée entre l'UE et la NAF.

7. Procédé selon la revendication 6, comprenant en outre l'étape suivante avant la réception d'une seconde clé partagée d'interface locale par l'équipement périphérique :
l'exécution (511) de l'authentification d'identité et de l'établissement d'une connexion sécurisée entre l'équipement périphérique et la NAF.

8. Procédé selon la revendication 6 ou 7, dans lequel le procédé d'authentification d'identité comprend notamment l'une des étapes suivantes :
l'exécution (505, 511) de l'authentification d'identité dans le mode de sécurité de la couche de transport à base de clé pré-partagée, ou PSK_TLS ;
l'exécution (505, 511) de l'authentification d'identité dans le mode d'authentification "digest http" à base de clé partagée ;
ou l'exécution (505, 511) de l'authentification d'identité dans le mode "digest http" sur TLS.

9. Procédé selon la revendication 6, 7 ou 8, dans lequel le procédé d'établissement d'une connexion sécurisée comprend :
l'établissement (505, 511) d'une connexion TLS dans un mode d'authentification TLS en conformité avec le certificat de clé publique.

10. Procédé selon l'une quelconque des revendications 1 à 9, dans lequel la procédure de réception par l'équipement périphérique d'une seconde clé partagée d'interface locale qui est calculée par un côté réseau en fonction de la clé partagée entre l'UE et la BSF et l'identité d'équipement périphérique, comprend :
le calcul (408) par la BSF, au côté réseau, de la seconde clé partagée d'interface locale à la demande de la NAF ;
l'envoi (411) par la NAF, au côté réseau, de la seconde clé partagée d'interface locale à l'équipement périphérique ; ou
le calcul (508) par la BSF, au côté réseau, d'une clé calculée en fonction de la clé partagée, à la demande de la NAF ;
le calcul (510, 512) par la NAF, au côté réseau, de la seconde clé partagée d'interface locale en fonction de la clé calculée et de l'identité de l'équipement périphérique, et l'envoi de la seconde clé d'interface locale à l'équipement périphérique.

11. Procédé selon l'une quelconque des revendications 1 à 10, dans lequel, lors du processus de calcul de la première clé partagée d'interface locale, l'identification NAF est l'identification de la NAF reçue par l'UE en provenance de l'équipement périphérique ; ou
la relation de correspondance (404, 504) entre l'identification NAF et l'identification de l'UICC ou du ME dans l'UE est préconfigurée dans l'UE, l'identification NAF étant déduite par l'UE à partir de l'UICC ou du ME.

12. Procédé de négociation d'une clé partagée entre un équipement utilisateur, UE, et un équipement périphérique, **caractérisé en ce qu'**il comprend un moyen permettant de mettre en oeuvre le procédé selon l'une quelconque des revendication 1 à 11.

13. Équipement utilisateur, UE (404, 504), connecté à un équipement périphérique, **caractérisé par le fait qu'**il comprend :
un module à fonction de calcul de clé d'interface locale, configuré pour calculer la clé d'interface locale en fonction de l'identité d'un équipement périphérique connecté à l'UE et d'une clé partagée entre l'UE et une entité à fonction de serveur de démarrage, BSF, mettant en oeuvre une vérification et une authentification initiales de l'identité d'un abonné.

14. Entité à fonction de serveur de démarrage, BSF (408, 508), mettant en oeuvre une vérification et une authentification initiales de l'identité d'un abonné, configurée pour calculer une clé d'interface locale entre un équipement utilisateur, UE, et un équipement périphérique, **caractérisé par le fait qu'**elle comprend :
un module à fonction de calcul de clé d'interface locale, configuré pour calculer la clé d'interface locale en fonction de la clé partagée entre la BSF et l'UE, et de l'identité obtenue de l'équipement périphérique connecté à l'UE, et pour fournir la clé d'interface locale à une entité à fonction d'application de réseau, NAF.

15. Entité à fonction de calcul d'une clé d'interface locale au niveau d'un côté réseau, destinée à calculer une clé d'interface locale entre un équipement utilisateur (UE) (404, 504), et un équipement périphérique (401, 501),
un premier module à fonction de calcul d'une clé d'interface locale, situé dans une entité à fonction de serveur de démarrage, BSF (408, 508), mettant en oeuvre une vérification et une authentification initiales de l'identité d'un abonné, étant configuré pour calculer une clé calculée à partir d'une clé partagée entre la BSF et un UE ; **caractérisé en ce que** :
un second module à fonction de calcul de clé d'interface locale, situé dans une entité à fonction d'application de réseau, NAF (410, 510), est configuré pour calculer la clé d'interface locale en fonction de l'identité obtenue d'un équipement périphérique et la clé calculée par le premier module à fonction de calcul de clé d'interface locale.
